# NOUVEAU FASCICULE DE BREVET EUROPEEN

(11) **EP 2 636 694 B2**
(45) Date de publication et mention de la décision concernant l'opposition: **01.03.2023**
(45) Mention de la délivrance du brevet: 25.03.2020
(21) Numéro de dépôt: 13158480.7
(22) Date de dépôt: 08.03.2013
(51) Int. Cl.: C08G 101/00, C08G 18/63, C08G 65/26, C08G 65/332, C08G 18/40, C08G 63/20, C08G 18/48, C08G 63/47, C08G 63/48, C08G 63/668

(54) **Polyester polyéther polyol**
polyesteretherpolyol
polyester polyether polyol

(30) Priorité: 09.03.2012 FR 1252162
(43) Date de publication de la demande: 11.09.2013
(73) Titulaire: OLEON NV, 9940 Evergem (BE)
(72) Inventeur: Kerbrat, Marion, 60280 Margny-Lès-Compiègne (FR); Chatillon, Matthieu, 60200 Compiègne (FR)
(74) Mandataire: Santarelli

(56) Documents cités:
- EP-A1- 0 801 088
- EP-A1- 1 074 569
- EP-A1- 2 554 559
- EP-A2- 0 379 916
- WO-A1-2008/104541
- WO-A2-2008/029065
- CA-A1- 2 819 569
- CN-A- 101 205 292
- DE-B- 1 291 510
- FR-A- 1 139 226
- FR-A- 1 211 545
- FR-A- 1 211 547
- FR-A- 1 375 277
- GB-A- 1 049 126
- GB-A- 1 442 569
- GB-A- 1 592 260
- US-A- 3 138 562
- US-A- 5 003 027
- US-A- 5 151 484
- US-A- 5 151 484
- US-A1- 2003 092 841
- US-A1- 2004 127 591
- US-A1- 2004 127 591
- US-A1- 2011 086 215
- US-A1- 2012 258 269
- Translation of D13

## Description

La présente invention concerne un polyester polyéther polyol, son procédé de préparation ainsi que son utilisation pour la fabrication de polyuréthanes. Elle concerne également, un polyuréthane comprenant le polyester polyéther polyol selon l'invention, son procédé de préparation et son utilisation dans les domaines des équipements automobiles, de l'ameublement, du bâtiment et des emballages de protection.

Généralement, les polyols utilisés dans la formulation de polyuréthanes sont des polyéthers polyols ou bien des polyesters polyols.

A l'heure actuelle, les polyuréthanes sont utilisés dans de nombreux domaines. On les retrouve, par exemple, dans le domaine de l'automobile, du bâtiment, de l'ameublement, où ils se présentent sous différentes formes telles que les mousses polyuréthanes flexibles en bloc, les mousses flexibles moulées ou bien encore les mousses rigides.

La demande en polyuréthane sous formes variées est toujours plus croissante, ainsi que celle en polyols permettant d'obtenir de tels polyuréthanes.

A l'origine, les polyols étaient majoritairement des polyols pétrochimiques, c'est-à-dire des polyéthers polyols.

Pour faire face à la demande croissante de matériaux plus écologiques, il a été proposé d'utiliser des polyols renouvelables.

Les polyols d'origine végétale (verts) actuels sont par exemple, l'huile de ricin, les huiles oxypolymérisées, les huiles et les esters époxydé(e)s ainsi que des polyesters polyols issus de la maléïnisation.

Toutefois, la substitution totale ou partielle des polyols pétrochimiques par les polyols verts, présente aujourd'hui de nombreuses difficultés.

Les polyols dits « verts » comprennent un nombre important de fonctions alcools secondaires ainsi que des fonctions esters. Les fonctions alcools secondaires confèrent une diminution de la réactivité de ces polyols vis-à-vis de l'isocyanate lors de la réaction de préparation de polyuréthane, tandis que la structure obtenue par la réaction de polycondensation confère une augmentation de la viscosité les rendant difficilement manipulables industriellement.

De plus, il est difficilement envisageable de réaliser des mélanges de polyéther polyols pétrochimiques et de polyols verts, car ces derniers décantent en présence de polyéther polyols pétrochimiques.

La présente invention concerne donc un polyester polyéther polyol présentant notamment des propriétés améliorées dont une ou plusieurs, et avantageusement toutes, les propriétés suivantes :
- la possibilité d'être à plus de 50% d'origine renouvelable,
- une augmentation de la réactivité par rapport aux polyols verts connus,
- une combinaison de fonctions ester et éther sur les mêmes molécules permettant une meilleure compatibilité avec les polyols d'origine pétrochimique,
- la présence, préférablement exclusive, de fonctions hydroxyles primaires,
- une viscosité compatible avec une utilisation industrielle obtenue par l'introduction de fonctions éthers,
- l'amélioration de la miscibilité avec les polyéthers polyols d'origine fossile par la présence de fonctions éthers, permettant le mélange ; et
- une plus grande résistance à l'inflammabilité due aux fonctions esters présentes dans le polyester polyéther polyol selon l'invention.

Le polyester polyéther polyol selon l'invention est susceptible d'être obtenu par une réaction de polycondensation à partir d'un mélange des composés suivant :
- le produit d'un polyol ayant réagi avec un oxyde d'éthylène, dans lequel le polyol a réagi avec 5 à 40 moles d'oxyde d'éthylène par mole de polyol initial,
- un polyacide et/ou un anhydride d'acide cyclique, et,
- un monoacide,

dans lequel lesdits produits sont mélangés dans des proportions telles que :
   - le polyol éthoxylé représente entre 25 et 65% en poids,
   - le polyacide et/ou l'anhydride d'acide cyclique représente entre 1 et 45% en poids, et
   - le monoacide représente entre 15 et 65% en poids,
les pourcentages en poids étant exprimés sur le poids total des composés avant réaction,
et dans lequel ledit polyester polyéther polyol comporte au moins 90% de fonctions hydroxyles primaires et présente une masse molaire comprise entre 1600 et 2800g/mol et une viscosité à 25°C comprise entre 1000 et 30000 mPa.s.

La masse molaire du polyester polyéther polyol est déterminée par chromatographie d'exclusion stérique en utilisant la chromatographie en phase liquide, le polyester polyéther polyol étant dilué dans 0,2 q/mol de tetrahvdrofuranne avant d'être analysé.

La viscosité est mesurée par la méthode à la chute de bille où la distance de la chute sur une distance de 10,4 cm d'une bille d'acier de 2mm de diamètre dans un tube à essais vertical calibré de 16x160mm est mesurée à la 1/10 de seconde. De préférence, le monoacide est choisi parmi les acides gras.

Avantageusement, l'acide gras est un acide gras de colza, de tournesol, de soja, de tournesol oléique, de ricin, de carthame, de coprah, de palme, de suif, d'olive, de coton, de lin, de mais, de bois de chine, d'arachide, de calendula, de pépin de raisin ou un mélange de deux au moins de ces acides gras.

Le polyester polyéther polyol selon l'invention, est obtenu par polycondensation du produit d'un polyol ayant réagi avec un oxyde d'alkylène qui est de l'oxyde d'éthylène. Le polyol est choisi dans le groupe constitué par les sucres, le sorbitol, le glycérol, les polyglycérols, l'isosorbide, le sorbitan, le mono-propylène glycol, le 1,3-propanediol, le mono-éthylène glycol, le triméthylolpropane, le néopentylglycol, les polyéthylènes glycols, les polypropylènes glycols, le pentaérythritol, leurs produits de réaction avec un oxyde d'alkylène, qui est de l'oxyde d'éthylène, seul ou dans un mélange d'au moins deux de ces composés.

A titre d'exemple, les sucres sont le saccharose, le glucose, le dextrose et/ou leurs mélanges.

Le polyol peut être d'origine renouvelable et/ou d'origine fossile.

Le polyol renouvelable est choisi parmi le groupe constitué par le sorbitol, le glycérol, les polyglycérols, le saccharose, le glucose, le xylitol, le maltose, le mannose, le xylose, le mannitol, l'acide saccharique, l'érythritol, le pentaérythritol, le di-pentaérythritol, l'isosorbide, le propylène glycol, le 1,3-propanediol, leurs produits de réaction avec un oxyde d'alkylène, seul ou dans un mélange d'au moins deux de ses composés.

Le polyol d'origine fossile est choisi parmi le groupe constitué par le triméthylolpropane, le néopentylglycol, les polyéthylènes glycols, les polypropylènes glycols leurs mélanges ainsi que leurs produits de réaction avec un oxyde d'alkylène.

Avantageusement, le polyol est du sorbitol et/ou du glycérol. Plus particulièrement le polyol est du glycérol.

L'invention a notamment pour objet un polyester polyéther polyol, dans lequel le polyol initial peut comprendre au moins une fonction hydroxyle secondaire. Il est avantageux dans ce cas que toutes les fonctions hydroxyles secondaires initiales dudit polyol aient réagi au moins une fois avec de l'oxyde d'éthylène.

Pour la préparation du polyester polyéther polyol selon l'invention, le polyol initial est donc mis en présence d'un oxyde d'alkylène qui est de l'oxyde d'éthylène. Dans ce cas, il est recommandé d'agir de manière à ce qu'à la suite de cette réaction toutes, ou la presque totalité, les fonctions hydroxyles, et notamment les fonctions hydroxyles secondaires présentent sur le polyol de départ aient réagi au moins une fois avec de l'oxyde d'éthylène.

Ainsi il est préféré que le polyol utilisé pour obtenir un polyester polyéther polyol selon l'invention présente une majorité de fonctions hydroxyles primaires (par exemple plus de 90%, ou plus de 98%). Avantageusement celui-ci ne présente que des fonctions hydroxyles primaires.

Selon un aspect de l'invention le polyol utilisé, ou polyol initial, peut-être le résultat d'une réaction d'alkoxylation antérieure. Dans ce cas l'oxyde d'alkylène est choisi parmi le groupe constitué par, l'oxyde de propylène, l'oxyde de butylène et leurs mélanges.

Ainsi, dans le cas où l'oxyde de propylène est utilisée, le polyol est ensuite mis en réaction avec un oxyde d'éthylène afin d'obtenir un polyol n'ayant que des fonctions hydroxyles primaires.

De même, dans le cas où l'oxyde de butylène est utilisé, le polyol est ensuite mis en réaction avec un oxyde d'éthylène afin d'obtenir des fonctions hydroxyles primaires.

Un aspect particulièrement préféré de l'invention est d'utiliser des polyols d'origine végétal tels que décrit précédemment en les soumettant directement à une étape d'éthoxylation, sans étapes d'alkoxylation préliminaire.

Préférentiellement, le polyol est alkoxylé avec une quantité minimale de plus de 5, avantageusement de plus de 7, moles d'oxyde d'éthylène par moles de polyol initial. Cette quantité est d'environ 5 à 40, avantageusement de 5 à 20 moles d'oxyde d'éthylène par mole de polyol initial. Ces quantités minimales permettent d'obtenir un degré d'alkoxylation élevé qui permet d'obtenir des fonctions hydroxyles primaires plus réactives et des fonctions éthers plus compatibles notamment avec les polyéthers polyols d'origine fossile.

Il est précisé que dans toute la présente demande, les gammes de valeurs s'entendent bornes incluses.

Lorsque le polyol est du glycérol, il est éthoxylé de préférence avec une quantité minimale de 7, moles d'oxyde d'éthylène.

Lorsque le polyol est du sorbitol, il est éthoxylé de préférence avec une quantité minimale de 13 moles d'oxyde d'éthylène.

Lorsque le polyol est du triméthylolpropane, il est éthoxylé de préférence avec une quantité minimale de 7 moles d'oxyde d'éthylène.

Lorsque le polyol est du néopentylglycol, il est éthoxylé avec une quantité minimale de 5, moles d'oxyde d'éthylène.

De manière générale il est indiqué d'augmenter la quantité d'oxyde d'alkylène à utiliser en fonction du nombre de fonctions hydroxyles présentes sur le polyol à éthoxyler de manière à être en excès d'oxyde.

Le polyester polyéther polyol selon l'invention, est susceptible d'être obtenu par une réaction de polycondensation se déroulant notamment en présence :
- d'un polyacide qui est choisi parmi le groupe constitué par les acides gras dimères, les acides gras trimères, les diacides, les triacides, et/ou
- d'un anhydride d'acide cyclique,
qui sont utilisés seuls ou en mélange d'au moins deux de ces composés.

De préférence, le polyacide est un oligomère d'acide gras, en particulier un acide dimère ou trimère, un diacide, un triacide ou un mélange d'au moins deux de ces composés.

Un acide dimère est généralement obtenu à partir d'une huile insaturée, par exemple, de l'huile de colza, de soja ou de tung ou d'acide gras d'huile de tall. Ladite huile insaturée est hydrolysée puis une opération de dimérisation est effectuée. Un mélange de monomères, dimères et trimères est généralement obtenu, dont les fractions sont séparées. Il est possible d'utiliser seulement la fraction « dimères » ou « trimères » ou un mélange de ces deux fractions.

Préférentiellement, l'acide gras dimère est un acide gras dimérisé issu d'huile de colza, de tournesol, de soja, de tournesol oléique, de ricin, de carthame, de coprah, de palme, de suif, d'olive, de coton, de lin, de maïs, de bois de chine, d'arachide, de calendula ou de pépin de raisin.

Préférentiellement, le diacide est choisi parmi le groupe constitué par l'acide adipique, l'acide azélaïque, l'acide fumarique, l'acide maléique, l'acide glutarique, l'acide succinique, l'acide sébacique, l'acide tartrique, l'acide subérique, l'acide pimélique et leur mélange.

De préférence, le triacide est l'acide citrique.

Par « anhydride d'acide cyclique », on entend un anhydride de formule R1-CO-O-CO-R2, dans laquelle les groupements R1 et R2 forment ensemble un cycle incluant la fonction anhydride -CO-O-CO-.

Plus préférentiellement, l'anhydride d'acide cyclique est choisi parmi le groupe constitué l'anhydride adipique, l'anhydride fumarique, l'anhydride glutarique, l'anhydride succinique, l'anhydride tartrique et leur mélange.

Le polyacide ou l'anhydride d'acide cyclique peut être d'origine fossile ou renouvelable.

Un polyacide d'origine fossile est avantageusement l'acide pimélique.

Un polyacide renouvelable est avantageusement choisi parmi le groupe constitué par l'acide azélaïque, l'acide fumarique, l'acide glutarique, l'acide succinique, l'acide sébacique, l'acide tartrique, l'acide subérique, et l'acide saccharique

Un anhydride cyclique renouvelable est avantageusement choisi parmi le groupe constitué par l'anhydride fumarique, l'anhydride maléique, l'anhydride glutarique, l'anhydride succinique, l'anhydride tartrique et l'anhydride subérique.

Pour obtenir un polyester polyéther polyol selon l'invention, les produits de départ sont dans des proportions telles que :
- le polyol éthoxylé représente de 25 à 65% en poids,
- le polyacide et/ou l'anhydride cyclique représente de 1 à 45 % en poids, et
- le monoacide représente de 15 à 65 % en poids,
les pourcentages en poids étant exprimés en poids total des composés avant réaction.

De préférence, le polyol éthoxylé représente de 30 à 55% en poids total des composés avant réaction.

De préférence, le polyacide et/ou l'anhydride cyclique représente de 5 à 40 % en poids total des composés avant réaction.

De préférence, le monoacide représente de 20 à 60 % en poids total des composés avant réaction.

Selon un aspect particulier de l'invention, le polyol, le polyacide et/ou l'anhydride d'acide cyclique, et éventuellement, le monoacide utilisés pour la préparation du polyester polyéther polyol sont d'origine renouvelable.

Par « renouvelable », on entend un composé d'origine naturelle susceptible de se régénérer et dont la consommation ne diminue pas la ressource à l'échelle humaine.

Il est possible de déterminer le taux renouvelable d'un composé par la datation au carbone quatorze avec la méthode standardisée ASTM D6866.

Selon un mode préféré de l'invention, le polyester polyéther polyol selon l'invention a un taux renouvelable d'au moins 55%, préférentiellement d'au moins 65% et par exemple d'au moins 70%.

La présente invention concerne un polyester polyéther polyol préparé à partir d'un polyol éthoxylé, d'un polyacide et/ou anhydride d'acide cyclique, et d'un monoacide, comportant au moins 90% de fonctions hydroxyles primaires, présentant une masse molaire allant de 1 600 à 2 800 g/mol, et une viscosité à 25°C allant de 1 000 et 30 000 mPa.s., de préférence allant de 2 000 à 8000 mPa.s.

Le polyol, le polyacide et/ou l'anhydride d'acide cyclique et le monoacide sont avantageusement tous d'origine renouvelable.

De préférence, un polyester polyéther polyol selon l'invention a 95% de fonctions hydroxyles primaires. Plus préférentiellement, la totalité de ses fonctions hydroxyles sont primaires.

De préférence, l'indice hydroxyle va de 15 et 200 mg KOH/g, plus particulièrement de 20 à 130 mg KOH/g. Plus préférentiellement, l'indice hydroxyle va de 30 à 80 mg KOH/g, et particulièrement de 30 à 70 mg de KOH/g.

L'indice d'hydroxyle est le nombre de milligrammes de potasse nécessaire pour neutraliser l'acide chlorhydrique libéré par l'acétylation d'un gramme de matière grasse à l'aide du chlorure d'acétyle.

De préférence, la viscosité à 25°C ±0,1°C est comprise entre 2000 et 8000 mPa.s.

La viscosité peut être définie comme la résistance à l'écoulement uniforme et sans turbulence se produisant dans la masse d'une matière. Lorsque la viscosité augmente, la capacité du fluide à s'écouler diminue. Pour un liquide, la viscosité tend généralement à diminuer lorsque la température augmente. De préférence la viscosité est mesurée par la méthode à la chute de bille ou la distance de la chute sur une distance de 10,4 cm d'une bille d'acier de 2mm de diamètre dans un tube à essais vertical calibré de 16x160mm est mesurée à la 1/10 de seconde. Le temps de chute mesuré est celui mesuré entre le temps où la bille en chute libre a juste dépassé (est en dessous du) premier repère et celui où la bille atteint le repère inférieur.

Le polyester polyéther polyol selon l'invention comporte une masse moléculaire importante, toutefois, sa viscosité reste faible. Ces caractéristiques permettent de faciliter la fabrication de certains objets, tels que les polyuréthanes, en particulier les mousses polyuréthanes moulées.
Le polyester polyéther polyol selon l'invention correspond préférentiellement à la formule A suivante : 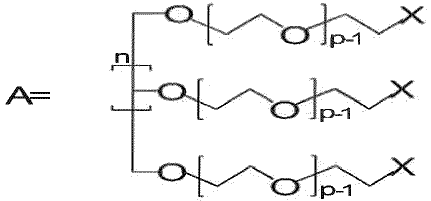 dans laquelle
- p est un nombre entier, identique ou différent, allant de 1 à 38, préférablement de 1 à 10, avantageusement de 1 à 3.
- n est un nombre entier allant de 1 et 4, de préférence de 1 à 3.
- X, égal ou différent, représente :
   - un groupement R-COO- dans lequel l'acide R-COOH correspondant est un mono acide, ou
   - une fonction hydroxyle (OH), ou
   - un groupement de formule (I) 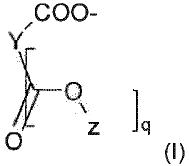 dans lequel
      - le groupement Y(COO-)_{q+1} correspond à un polyacide et/ou un anhydride d'acide cyclique de formule Y(COOH)_{q+1},
      - q est un nombre entier compris entre 1 et 2,
      - Z représente un atome d'hydrogène ou un groupement (de formule A, tel que décrit précédemment,
Les nombres n et les groupements X sont évidemment choisis de manière à ce que ledit polyester polyéther polyol comprenne au moins deux fonctions ester et deux fonctions alcools.

De préférence, le polyol est le glycérol et/ou le sorbitol (n=4).

De préférence, lorsque le polyol est le sorbitol, p est au moins égal à 11.

De préférence, le monoacide est un acide gras.

Avantageusement, le polyacide peut être de l'acide succinique, adipique, sébacique, fumarique, azélaïque, subérique, pimélique ou glutarique.

Préférentiellement le polyacide est un acide gras dimérisé de colza, de tournesol, de soja, de tournesol oléique, de ricin, de carthame, de coprah, de palme, de suif, d'olive, de coton, de lin, de mais, de bois de chine, d'arachide, de calendula ou de pépin de raisin.

De préférence le polymère de formule A à un poids moléculaire tel que défini précédemment.

Le polyester polyéther polyol de formule A peut être obtenu par le procédé précédemment décrit, notamment par utilisation directe d'oxyde d'éthylène sur un polyol de formule CH₂(OH)-CH(OH)ₙ-CH₂(OH).

La présente invention concerne également, le procédé de préparation d'un polyester polyéther polyol comprenant une étape de polycondensation des produits suivants :
- le produit d'un polyol ayant réagi avec 5 à 40 moles d''oxyde d'éthylène,
- un polyacide et/ou un anhydride d'acide cyclique, et
- un monoacide,

dans lequel lesdits produits sont mélangés dans des proportions telles que :
   - le polyol éthoxylé représente entre 25 et 60% en poids,
   - le polyacide représente entre 1% et 45% en poids, et
   - le monoacide représente entre 15 et 65% en poids,
les pourcentages en poids étant exprimés sur le poids total des composés avant réaction.

Le polyol, l'oxyde, le polyacide et/ou anhydride d'acide cyclique, et le monoacide sont tels que définis précédemment.

Selon une caractéristique optionnelle de l'invention, le procédé de préparation d'un polyester polyéther polyol est conduit en présence d'un catalyseur.

La catalyse peut être acide, basique, métallique, homogène et/ou hétérogène.

La réaction de polycondensation peut avoir lieu sous vide partiel ou sous vide total.

Selon une caractéristique optionnelle de l'invention, le polyol a réagi avec de l'oxyde de propylène puis de l'oxyde d'éthylène, ou de l'oxyde de butylène puis l'oxyde d'éthylène.

Le polyol initial réagit avec de 5 à 40, préférentiellement au moins 7 et plus particulièrement avec de 5 à 20 moles de l'un des composés suivants :
- oxyde d'éthylène,
- oxyde de butylène, cette réaction est suivie d'une réaction avec de 5 à 40, avantageusement 5 à 20 moles d'oxyde d'éthylène, ou
- oxyde de propylène, cette réaction est suivie d'une réaction avec 5 à 40, avantageusement de 5 à 20 moles d'oxyde d'éthylène.

De préférence, dans le procédé de préparation d'un polyester polyéther polyol selon l'invention, la réaction de polycondensation est conduite à une température allant de 160 à 280°C, plus particulièrement de 160 à 250°C.

Préférentiellement, la réaction de polycondensation est conduite à une température allant de 210 à 230°C, plus préférentiellement à 220°C.

De préférence, la réaction de condensation est arrêtée lorsque l'indice d'acide du milieu réactionnel devient inférieur à 1.

Selon un autre aspect, l'invention a pour objet l'utilisation du polyester polyéther polyol tel que défini précédemment, pour la fabrication de polyuréthane.

La présente invention concerne également un polyuréthane comprenant de 5 à 70% de polyesters polyéthers polyols selon l'invention, les pourcentages étant donnés en poids total de polyuréthane.

De préférence, le polyuréthane selon l'invention comprend de 50 à 70% de polyesters polyéthers polyols selon l'invention, ce pourcentage étant exprimé en poids total de polyuréthane.

La présente invention concerne également, un procédé ou une méthode de préparation de polyuréthane comprenant une étape de mise en réaction d'un polyester polyéther polyol selon l'invention avec un composé isocyanate.

Le composé isocyanate est choisi parmi le groupe constitué par :
le toluène 2,4 diisocyanate (2,4 TDI), toluène 2,6 diisocyanate (2,6 TDI), 4,4' diphénylméthane-diisocyanate (4,4'-MDI), 2,4' diphénylméthane-diisocyanate (2,4'-MDI), 2,2' diphénylméthane-diisocyanate (2,2'-MDI), 1,5-naphtalène diisocyanate (MD! polymère 1,5-NDI), paraphénylène diisocyanate (PPDl),métaphénylène diisocyanate (PDI), 3,3'-diméthyl-4,4'-diphényldiisocyanate (TODI), 4,6-xylylene diisocyanate (XDI), dicyclohexylméthane-4,4'-diisocyanate (H12MDI), 1,6-diisocyanatohexane (HDI), trans-1,4-cyclohexylène diisocyanate (CHDI), isophorone diisocyanate (IPDI), dicyclo-hexylméthane-4,4'-diisocyanate (H12MDI) et un mélange de ceux-ci.

La présente invention concerne également l'utilisation d'un polyuréthane selon l'invention dans les domaines de l'ameublement, des équipements automobiles, du bâtiment et du conditionnement.

Les propriétés de faible viscosité du polyester polyéther polyol selon l'invention facilitent la fabrication de mousse polyuréthane dans une gamme de degré de souplesse plus large ainsi qu'une utilisation dans de nombreux domaines d'activités.

Concernant le domaine de l'ameublement, l'invention s'applique à titre d'exemple aux mousses constituant les matelas, les cousins, les sièges, les fauteuils, les canapés.

Concernant le domaine des équipements automobiles, l'invention s'applique à titre d'exemple, aux sièges automobiles, appuis têtes, tableau de bord, sous-tapis, volant.

Concernant le domaine du bâtiment, l'invention s'applique, à titre d'exemple, aux matériaux servant à l'isolation.

Concernant le domaine du conditionnement, l'invention s'applique, à titre d'exemple, aux emballages de protection.

L'invention sera mieux comprise à la lecture des exemples qui vont suivre, donnés uniquement à titre d'exemple.

### Exemple 1 : Polyester polyéther polyol

### Mode opératoire :

Le polyester polyéther polyol est préparé selon le procédé de préparation décrit ci-après :
- mélanger les différents réactifs définis dans le tableau ci-dessous,
- chauffer à 220°C sous agitation et bullage d'azote,
- arrêter la réaction lorsque l'indice d'acide (IA) est inférieur à 1 (après environ 20h sans catalyseur, et après 15h en présence de 0,1% de Tert butyl titanate).

Le polyol éthoxylé 7OE est du glycérol éthoxylé par 7 moles d'oxyde d'éthylène.

Le polyol éthoxylé 12OE est du glycérol éthoxylé par 12 moles d'oxydes d'éthylène.

La composition « acide gras de colza » est un mélange de 5% C16, 2% C18, 61% C18 :1,20% C18 :2, 8% C18 :3 en poids.

La composition « acides gras dimérisé de colza » est obtenu à partir de la composition susmentionnée et comprend 86% de dimères, 11% de trimères et 3% de monomères.

Les polyesters polyéthers polyols selon l'invention ainsi préparés (composés nommés A, B, C, D, sont ci-après définis par leur pourcentage massique, leur indice

| **N° Essai** | **Formule (% massique)** | | **IA** | **IOH** | **M (g/mol)** | **F** | **% renouvelable** |
|---|---|---|---|---|---|---|---|
| A | Glycérol 7OE | 39,44 | 1 | 47,9 | 2502 | 2,1 | 69,6 |
| | Acide gras dimérisé de colza | 34,65 | | | | | |
| | Acide gras de colza | 25,91 | | | | | |
| B | Glycérol 7OE | 42,20 | 1 | 65,5 | 2106 | 2,5 | 67,5 |
| | Acide gras dimérisé de colza | 34,42 | | | | | |
| | Acide gras de colza | 23,38 | | | | | |
| C | Glycérol 12OE | 51,83 | 1 | 46,9 | 2505 | 2,1 | 55,9 |
| | Acide gras dimérisé de colza | 26,14 | | | | | |
| | Acide gras de colza | 22,03 | | | | | |
| D | Sorbitol 12OE | 35,29 | 1 | 41,3 | 3015 | 2,2 | 73,7 |
| | Acide gras dimérisé de colza | 10,98 | | | | | |
| | Acide gras de colza | 53,73 | | | | | |

d'acidité (IA), leur indice hydroxyle (IOH), leur masse molaire (M), leur fonctionnalité théorique (F) et leur pourcentage, ou taux, renouvelable.

IOH correspond à l'indice d'hydroxyle. L'indice d'hydroxyle est le nombre de milligrammes de potasse nécessaire pour neutraliser l'acide chlorhydrique libéré par l'acétylation d'un gramme de matière grasse à l'aide du chlorure d'acétyle.

IA correspond à l'indice d'acide selon la norme ISO 660 d'un corps gras, c'est-à-dire, qu'il correspond au nombre de milligrammes de potasse nécessaire pour neutraliser l'acidité libre d'un gramme de matière grasse.

F correspond à la fonctionnalité théorique. La fonctionnalité théorique est définie en considérant que chaque groupe fonctionnel d'une molécule de monomère contient un ou plusieurs sites réactifs capables de former une liaison chimique avec une autre molécule de monomère. La fonctionnalité d'un monomère est égale au nombre de sites réactifs que comporte chacune de ses molécules. Néanmoins, lors de la réaction, alors que les composants sont introduits en quantité théoriquement adaptée pour obtenir une certaine fonctionnalité (reliée à l'indice d'hydroxyle et à la masse molaire), nous pouvons éventuellement observer un entrainement de certain monomère qui provoque un déséquilibre et un éventuel changement de fonctionnalité.

M correspond à la masse théorique. Les poids moyens expérimentaux de ces polymères sont les suivants :
Essai A, Mn 2286 g/mol
Essai B, Mn 1744 g/mol
Essai C, Mn 2264 g/mol
Essai D, Mn 1973 g/mol

### Exemple 2 : Mousse polyuréthane

### Matériel :

Voranol CP 4755 : polyéther triol de Dow
Specflex NC 603 : polyéther triol de Dow
Niax A-1 : bis(2-diméthylaminoethyl)éther, catalyseur de Momentive
Niax A-33 : triéthylène diamine (DABCO), catalyseur de Momentive
Niax SH205 : surfactant silicone de Momentive
DEOA : Diéthanolamine de Acros
Suprasec 1057 : MDI de Huntsman

### Mode opératoire :

Formation du prémix A (polyester polyéther polyol + catalyseur + surfactant) en % massique puis ajout de la solution B (isocyanate) à température ambiante. Agitation 10s et moussage en expansion libre.

| N° essai | 1 | 2 |
|---|---|---|
| Voranol CP4755 | 40 | 30 |
| Specflex NC603 | 40 | 30 |
| Polyol vert | 20 de l'essai A | 40 de l'essai A |
| Eau | 1,6 | 1,6 |
| Niax A1 | 0,15 | 0,15 |
| Niax A33 | 0,9 | 0,9 |
| Niax SH 205 | 1 | 1,0 |
| DEOA | 0,6 | 0,6 |
| Suprasec 1057 | 34,6 | 35,6 |

On obtient des mousses souples qui sont caractérisées par les temps de crème et les temps de fil suivants :

| N° essai | 1 | 2 |
|---|---|---|
| Temps d'agitation (s) | 10 | 10 |
| Temps de crème (s) | 12 | 12 |
| Temps de fil (s) | 45 | 42 |

## Revendications

1. Polyester polyéther polyol susceptible d'être obtenu par la polycondensation des produits suivants :
- le produit d'un polyol ayant réagi avec un oxyde d'éthylène, dans lequel le polyol a réagi avec 5 à 40 moles d'oxyde d'éthylène par mole de polyol initial,
- un polyacide et/ou un anhydride d'acide cyclique, et,
- un monoacide,
dans lequel lesdits produits sont mélangés dans des proportions telles que :
- le polyol éthoxylé représente entre 25 et 65% en poids,
- le polyacide et/ou l'anhydride d'acide cyclique représente entre 1 et 45% en poids, et
- le monoacide représente entre 15 et 65 % en poids,
les pourcentages en poids étant exprimés sur le poids total des composés avant réaction,
et dans lequel ledit polyester polyéther polyol comporte au moins 90% de fonctions hydroxyles primaires et présente une masse molaire comprise entre 1600 et 2800 g/mol et une viscosité à 25°C comprise entre 1000 à 30000 mPa.s., ladite masse molaire du polyester polyéther polyol étant déterminée par chromatographie d'exclusion stérique en utilisant la chromatographie en phase liquide, le polyester polyéther polyol étant dilué dans 0,2 g/mol de tetrahydrofuranne avant d'être analysé et ladite viscosité étant mesurée par la méthode à la chute de bille où la distance de la chute sur une distance de 10,4 cm d'une bille d'acier de 2mm de diamètre dans un tube à essais vertical calibré de 16×160mm est mesurée à la 1/10 de seconde.

2. Polyester polyéther polyol selon la revendication 1, dans lequel le polyol est choisi parmi le groupe constitué par les sucres, le sorbitol, le glycérol, les polyglycérols, l'isosorbide, le sorbitan, le mono-propylène glycol, le 1,3-propanediol, le mono-éthylène glycol, le triméthylolpropane, le néopentylglycol, les polyéthylènes glycols, les polypropylènes glycols, le pentaérythritol, leurs produits de réaction avec un oxyde d'alkylène, seul ou dans un mélange d'au moins deux de ces composés.

3. Polyester polyéther polyol selon la revendication 1 ou 2, dans lequel toutes les fonctions hydroxyles secondaires initiales du polyol ont réagi au moins une fois avec de l'oxyde d'éthylène.

4. Polyester polyéther polyol selon l'une quelconque des revendications 1 à 3, dans lequel :
- le polyacide est choisi parmi le groupe constitué par les acides gras dimères, les acides gras trimères, les diacides, les triacides et/ou
- l'anhydride d'acide cyclique,
sont utilisés, seuls ou dans un mélange d'au moins deux de ces composés.

5. Polyester polyéther polyol selon l'une quelconque des revendications 1 à 4, dans lequel, le polyol, le polyacide et/ou l'anhydride d'acide cyclique, et le monoacide sont d'origine renouvelable.

6. Procédé de préparation d'un polyester polyéther polyol selon l'une quelconque des revendications 1 à 5, par polycondensation des produits suivants :
- le produit d'un polyol ayant réagi avec 5 à 40 moles d'oxyde d'éthylène,
- un polyacide et/ou un anhydride d'acide cyclique, et,
- un monoacide.
dans lequel lesdits produits sont mélangés dans des proportions telles que :
- le polyol éthoxylé représente entre 25 et 60% en poids,
- le polyacide représente entre 1 et 45 % en poids, et
- le monoacide représente entre 15 et 65 % en poids,
les pourcentages en poids étant exprimés sur le poids total des composés avant réaction.

7. Procédé de préparation d'un polyester polyéther polyol selon la revendication 6, dans lequel la réaction de polycondensation est conduite à une température comprise entre 160 et 250°C.

8. Utilisation du polyester polyéther polyol selon l'une quelconque des revendications 1 à 5, pour la fabrication de polyuréthane.

9. Polyuréthane comprenant entre 5 et 70% de polyesters polyéthers polyols selon l'une quelconque des revendications 1 à 5, les pourcentages étant donnés en poids total de polyuréthane.

10. Procédé de fabrication de polyuréthane comprenant une étape de mise en réaction d'un polyester polyéther polyol selon l'une quelconque des revendications 1 à 5, avec un composé isocyanate.

## Patentansprüche

1. Polyester-Polyether-Polyol, erhältlich durch die Polykondensation der folgenden Produkte:
- des Produkts aus einem Polyol, das mit einem Ethylenoxid reagiert hat, wobei das Polyol mit 5 bis 40 Mol Ethylenoxid pro Mol des ursprünglichen Polyols reagiert hat,
- einer Polysäure und/oder eines cyclischen Säureanhydrids und
- einer Monosäure,
wobei die Produkte in derartigen Verhältnissen gemischt werden, dass:
- das ethoxylierte Polyol zwischen 25 und 65 Gew.-% ausmacht,
- die Polysäure und/oder das cyclische Säureanhydrid zwischen 1 und 45 Gew.-% ausmachen, und
- die Monosäure zwischen 15 und 65 Gew.-% ausmacht,
wobei die Gewichtsprozentanteile bezogen auf das Gesamtgewicht der Verbindungen vor der Reaktion ausgedrückt werden,
und wobei das Polyester-Polyether-Polyol wenigstens 90 % primäre Hydroxylfunktionen umfasst und eine Molmasse zwischen 1.600 und 2.800 g/mol und eine Viskosität bei 25°C zwischen 1.000 und 30.000 mPa.s. aufweist, wobei die Molmasse des Polyester-Polyether-Polyols durch sterische Ausschlusschromatographie unter Verwendung von der Flüssigkeitschromatographie bestimmt wird, wobei das Polyester-Polyether-Polyol in 0,2 g/mol Tetrahydrofuran verdünnt wird, bevor es analysiert wird, und wobei die Viskosität durch das Kugelfallverfahren gemessen wird, wobei die Falldistanz über eine Distanz von 10,4 cm einer Stahlkugel mit einem Durchmesser von 2 mm in einem kalibrierten vertikalen Probenröhrchen von 16 × 160 mm auf 1/10 Sekunde gemessen wird.

2. Polyester-Polyether-Polyol nach Anspruch 1, wobei das Polyol aus der Gruppe ausgewählt wird, die aus Zuckern, Sorbitol, Glycerin, Polyglycerinen, Isosorbid, Sorbitan, Monopropylenglycol, 1,3-Propandiol, Monoethylenglycol, Trimethylolpropan, Neopentylglycol, Polyethylenglycolen, Polypropylenglycolen, Pentaerythritol, ihren Reaktionsprodukten mit einem Alkylenoxid, allein oder in einem Gemisch von wenigstens zwei dieser Verbindungen, besteht.

3. Polyester-Polyether-Polyol nach Anspruch 1 oder 2, wobei alle ursprünglichen sekundären Hydroxylfunktionen des Polyols wenigstens einmal mit Ethylenoxid reagiert haben.

4. Polyester-Polyether-Polyol nach einem der Ansprüche 1 bis 3, wobei:
- die Polysäure aus der Gruppe bestehend aus dimeren Fettsäuren, trimeren Fettsäuren, Disäuren, Trisäuren ausgewählt ist, und/oder
- das cyclische Säureanhydrid
allein oder in einem Gemisch von wenigstens zwei dieser Verbindungen verwendet werden.

5. Polyester-Polyether-Polyol nach einem der Ansprüche 1 bis 4, wobei Polyol, die Polysäure und/oder das cyclische Säureanhydrid und die Monosäure aus erneuerbaren Quellen stammen.

6. Verfahren zur Herstellung eines Polyester-Polyether-Polyols nach einem der Ansprüche 1 bis 5 durch Polykondensation der folgenden Produkte:
- des Produkts aus einem Polyol, das mit 5 bis 40 Mol Ethylenoxid reagiert hat,
- einer Polysäure und/oder eines cyclischen Säureanhydrids, und,
- einer Monosäure.
wobei die Produkte in derartigen Verhältnissen gemischt werden, dass:
- das ethoxylierte Polyol zwischen 25 und 60 Gew.-% ausmacht,
- die Polysäure zwischen 1 und 45 Gew.-% ausmacht, und
- die Monosäure zwischen 15 und 65 Gew.-% ausmacht,
wobei die Gewichtsprozentanteile bezogen auf das Gesamtgewicht der Verbindungen vor der Reaktion ausgedrückt werden.

7. Verfahren zur Herstellung eines Polyester-Polyether-Polyols nach Anspruch 6, wobei die Polykondensationsreaktion bei einer Temperatur zwischen 160 und 250 °C durchgeführt wird.

8. Verwendung des Polyester-Polyether-Polyols nach einem der Ansprüche 1 bis 5 zur Erzeugung von Polyurethan.

9. Polyurethan, umfassend zwischen 5 und 70 % Polyester-Polyether-Polyole nach einem der Ansprüche 1 bis 5, wobei die Prozentanteile bezogen auf das Gesamtgewicht des Polyurethans angegeben werden.

10. Verfahren zur Erzeugung von Polyurethan, umfassend einen Schritt der Reaktionseinleitung eines Polyester-Polyether-Polyols nach einem der Ansprüche 1 bis 5 mit einer Isocyanat-Verbindung.

## Claims

1. Polyester-polyether polyol able to be obtained by polycondensation of the following products:
- the product of a polyol having reacted with an ethylene oxide, in which the polyol has reacted with 5 to 40 moles of ethylene oxide per mole of initial polyol,
- a polyacid and/or a cyclic acid anhydride, and,
- a monoacid,
in which said products are mixed in proportions such that:
- the ethoxylated polyol represents between 25 to 65% by weight,
- the polyacid and/or the cyclic acid anhydride represents between 1 to 45 % by weight, and
- the monoacid represents between 15 to 65% by weight,
the percentages by weight being expressed with respect to the total weight of the compounds before reaction,
and in which said polyester-polyether polyol comprises at least 90% primary hydroxyl functions and has a molar mass comprised between 1600 and 2800 g/mol and a viscosity at 25°C comprised between 1000 to 30000 mPa.s., said molar mass of the polyester-polyether polyol being determined by steric exclusion chromatography, using liquid chromatography, the polyester-polyether polyol being diluted in 0.2 g/mol of tetrahydrofuran before analysis and said viscosity being measured by the falling ball method where the distance of drop over a distance of 10.4 cm of a steel ball of 2 mm diameter in a vertical calibrated 16x160 mm test tube is measured to 1/10 of a second.

2. Polyester-polyether polyol according to claim 1, in which the polyol is chosen from the group constituted by sugars, sorbitol, glycerol, polyglycerols, isosorbide, sorbitan, monopropylene glycol, 1,3-propanediol, monoethylene glycol, trimethylolpropane, neopentylglycol, polyethylene glycols, polypropylene glycols, pentaerythritol, their reaction products with an alkylene oxide, alone or in a mixture of at least two of these compounds.

3. Polyester-polyether polyol according to claim 1 or 2, in which all the initial secondary hydroxyl functions of the polyol have reacted at least once with ethylene oxide.

4. Polyester-polyether polyol according to any one of claims 1 to 3, in which:
- the polyacid is chosen from the group constituted by dimer fatty acids, trimer fatty acids, diacids, triacids and/or
- cyclic acid anhydride,
are used, alone or in a mixture of at least two of these compounds.

5. Polyester-polyether polyol according to any one of claims 1 to 4, in which the polyol, the polyacid and/or the cyclic acid anhydride and the monoacid are of renewable origin.

6. Process for the preparation of a polyester-polyether polyol according to any one of claims 1 to 5, by polycondensation of the following products:
- the product of a polyol having reacted with 5 to 40 moles of ethylene oxide,
- a polyacid and/or a cyclic acid anhydride, and,
- a monoacid.
in which said products are mixed in proportions such that:
- the ethoxylated polyol represents between 25 to 60% by weight,
- the polyacid represents between 1 to 45 % by weight, and
- the monoacid represents between 15 to 65% by weight,
the percentages by weight being expressed with respect to the total weight of the compounds before reaction.

7. Process for the preparation of a polyester-polyether polyol according to the claim 6, in which the polycondensation reaction is conducted at a temperature comprised between 160 and 250°C.

8. Use of the polyester-polyether polyol according to any one of claims 1 to 5, for the production of polyurethane.

9. Polyurethane comprising between 5 and 70% of polyester-polyether polyols according to any one of claims 1 to 5, the percentages being given in total weight of polyurethane.

10. Process for the production of polyurethane comprising a step of reacting a polyester-polyether polyol according to any one of claims 1 to 5, with an isocyanate compound.
